# EUROPÄISCHE PATENTSCHRIFT

(11) **EP 0 844 979 B1**
(45) Veröffentlichungstag und Bekanntmachung des Hinweises auf die Patenterteilung: **27.10.1999**
(21) Anmeldenummer: 96927708.6
(22) Anmeldetag: 09.08.1996
(51) Int. Cl.: C01B 33/16

(54) **PORÖSE MONODISPERSE SiO2-PARTIKEL**
POROUS MONODISPERSED SiO2 PARTICLES
PARTICULES DE SiO2 POREUSES MONODISPERSEES

(30) Priorität: 16.08.1995 DE 19530031
(43) Veröffentlichungstag der Anmeldung: 03.06.1998
(73) Patentinhaber: MERCK PATENT GmbH, 64293 Darmstadt (DE)
(72) Erfinder: UNGER, Klaus, D-64342 Seeheim (DE); KAISER, Christian, D-59269 Beckum (DE)
(86) Internationale Anmeldenummer: EP9603523
(87) Internationale Veröffentlichungsnummer: WO9707056

(56) Entgegenhaltungen:
- EP-A- 0 216 278
- EP-A- 0 653 378
- DE-B- 2 155 281
- DATABASE WPI Section Ch, Week 8943 Derwent Publications Ltd., London, GB; Class A60, AN 89-312712 XP002018389 & JP,A,01 230 421 (NIPPON SHOKUBAI KAGAKU) , 13.September 1989
- DATABASE WPI Section Ch, Week 8943 Derwent Publications Ltd., London, GB; Class A60, AN 89-312711 XP002018390 & JP,A,01 230 420 (NIPPON SHOKUBAI KAGAKU) , 13.September 1989 in der Anmeldung erwähnt

## Beschreibung

Die Erfindung betrifft monodisperse poröse kugelförmige Teilchen bestehend aus reinem SiO₂, sowie Verfahren zu ihrer Herstellung.

### Stand der Technik

In DE 21 55 281 ist die Herstellung von sphärischen porösen SiO₂-Teilchen beschrieben. Bei dem dort offenbarten Verfahren entstehen jedoch Teilchen im Größenbereich von 3-30 µm, so daß diese Produkte in einem aufwendigen Verfahren gesichtet werden müssen. Aus EP 0 216 278 sind Verfahren zur Herstellung von unporösen monodispersen kugelförmigen Teilchen aus SiO₂ durch Hydrolyse von Silanen bekannt. Der Durchmesser der Partikel kann durch Aufwachsverfahren vergrößert werden. Zur Erzeugung von stärker porösen Materialien wird in JP 89-230 420, ebenso wie in JP 89-239 015 vorgeschlagen, bei der Hydrolyse einen hochsiedenden Alkohol zuzusetzen. Auch in JP 89-230 420 sind Aufwachsverfahren offenbart. Die in JP 89-230 420 offenbarten Partikel enthalten gebundene organische Reste. Bei den letztgenannten Verfahren entstehen ausschließlich Mikroporen (Durchmesser von weniger als 2 nm).

Insbesondere für Trägermaterialien für die Flüssigkeitschromatographie sind jedoch größere Poren im Bereich von Meso- oder Makroporen ebenso wie eine enge, d.h. weniger als 20 % Standardabweichung, Partikelgrößenverteilung erwünscht.

### Allgemeine Beschreibung der Erfindung

Es wurde gefunden, daß es möglich ist, monodisperse poröse kugelförmige Teilchen herzustellen, die aus reinem SiO₂ bestehen, und die Mesoporen enthalten. Dazu werden zunächst nach bekannten Verfahren durch hydrolytische Kondensation von Alkoxysilanen zusammen mit Alkyl- oder Arylalkoxysilanen in ammoniakalischer Alkohollösung Teilchen erzeugt, die Alkyl- und/oder Arylreste enthalten. Diese Reste dienen als Porenbildner, wobei die Poren durch Pyrolyse dieser Reste entstehen. Es bildet sich eine reproduzierbare Porenstruktur. Bei der Pyrolyse werden die organischen Anteile entfernt, so daß reines SiO₂ zurückbleibt.

Gegenstand der Erfindung sind Verfahren zur Herstellung von porösen kugelförmigen Teilchen bestehend aus reinem SiO₂ mit einem mittleren Teilchendurchmesser d₅₀ von 0,05 bis 10 µm, einer Standardabweichung des Teilchendurchmessers von höchstens 15 % und einer Porenweite von 2-20 nm (20-200 Å) mit folgenden Verfahrensschritten:
a) Herstellen von kugelförmigen SiO₂-Teilchen mit einem mittleren Teilchendurchmesser d₅₀ von 0,05 bis 10 µm durch Hydrolyse und Polymerisation von Gemischen enthaltend Tetraalkoxysilane der Formel I sowie Trialkoxysilane der Formel II,

   (R¹-O)₄Si I

   (R¹-O)₃Si-R² II

   worin
   - R¹: C₁-C₁₀-Alkyl
   - R²: C₅-C₂₅-Alkyl, C₆-C₁₄-Aryl, C₇-C₂₅-Alkylaryl, C₇-C₂₅-Arylalkyl
   bedeuten;
b) Isolierung und Trocknung der Teilchen aus Schritt a);
c) Brennen der Teilchen bei einer Temperatur zwischen 600 und 1300 °C, wobei die Reste R² verbrennen und Poren entstehen.

Bevorzugterweise werden die Silane der Formel I im 3- bis 250-fachen molaren Überschuß bezogen auf die Silane der Formel II eingesetzt.

Gegenstand der Erfindung sind poröse kugelförmige Teilchen bestehend aus reinem SiO₂ mit einem mittleren Teilchendurchmesser d₅₀ von 0,05 bis 10 µm, einer Standardabweichung des Teilchendurchmessers von höchstens 15 %, bevorzugterweise unter 10 %, und einer Porenweite von 2-20 nm (20-200 Å), ebenso Pulver bestehend aus derartigen Teilchen.

Gegenstand der Erfindung ist die Verwendung von Pulvern aus porösen kugelförmigen Teilchen bestehend aus reinem SiO₂ mit einem mittleren Teilchendurchmesser d₅₀ von 0,05 bis 10 µm, einer Standardabweichung des Teilchendurchmessers von höchstens 15 % und einer Porenweite von 2-20 nm (20-200 Å) für die Herstellung von weitporigen Kieselgelen, deren Poren auf bis zu 1000 nm (10000 Å) erweitert sind, und für die Herstellung von derivatisierten Kieselgelen.

Die erfindungsgemäß verwendeten Tetraalkoxysilane enthalten bevorzugterweise C₁- bis C₅-Alkoxylreste; besonders bevorzugt ist Tetraethoxysilan. Die als Porenbildner verwendeten Trialkoxysilane der Formel II enthalten einen Rest R², der C₅- bis C₂₅-Alkyl oder C₆- bis C₁₄-Aryl oder C₇-bis C₂₅-Alkylaryl oder -Arylalkyl, bevorzugterweise C₆- bis C₂₀-n-Alkyl, bedeutet. Besonders bevorzugt ist die Verwendung von n-Octyltrimethoxysilan und n-Octadecyltrimethoxysilan.

Das Molverhältnis zwischen Tetraalkoxysilan und Trialkoxysilan der Formel II beträgt bevorzugterweise 3 bis 250; beispielsweise 3 bis 25 Mol Tetraethylsilan auf 1 Mol n-Octadecyltrimethoxysilan oder 10 bis 200 Mol Tetraethylsilan auf 1 Mol n-Octyltrimethoxysilan.

Tetraalkoxysilan und Trialkoxysilan der Formel II reagieren in einer wäßrig-alkoholischen Ammoniaklösung. C₁- bis C₅-Alkohole werden bevorzugt als Lösungsmittelbestandteil verwendet. Besonders bevorzugt ist die Verwendung von Methanol, Ethanol, n-Propanol oder i-Propanol, oder auch von Mischungen dieser Alkohole. Die Reaktionsmischung enthält bevorzugterweise: 5-10 Gewichts-% Tetraalkoxysilan, 0,01-1 Gewichts-% Trialkoxysilan, 70-90 Gewichts-% Alkohol, 2-10 Gewichts-% Ammoniak und 2-10 Gewichtsprozent Wasser.

Die Verwendung von hochreinen Ausgangsmaterialien hat sich als zweckmäßig erwiesen. Im übrigen sind vorteilhafte Reagenzien und Reaktionsbedingungen für die Herstellung von Silikagelpartikeln in EP 0 216 278 offenbart; auf diese Offenbarung wird verwiesen.

Das Ausbrennen der Partikel geschieht durch Erhitzen auf 600-1300 °C, bevorzugterweise 900-1100 °C,in Gegenwart von Luft oder Sauerstoff. Durch diesen Verfahrensschritt werden die organischen Reste entfernt und es entstehen Teilchen aus reinem SiO₂.

Bei einstufiger Verfahrensführung lassen sich Teilchen zwischen 0,05 und 2 µm Teilchendurchmesser erzeugen; für größere Teilchen werden Aufwachsverfahren, wie sie beispielsweise in EP 0 216 278 und in JP 89-230 420 offenbart sind, verwendet. Die Teilchengröße im einstufigen Verfahren läßt sich, wie von C.G. Tan et al. (1987) J. Colloid and Interface Science **118**, Seiten 290-293 beschrieben, durch die Variation von Temperatur und Wahl des Alkohols steuern.

Soweit Mikroporen überhaupt nachweisbar sind, so liegt ihr Anteil am gesamten Porenvolumen der Teilchen unter 5 Prozent.

Insbesondere für die Chromatographie werden die Oberflächen der SiO₂-Teilchen häufig derivatisiert, damit sie sich für verschiedene Trennverfahren eignen. Dabei werden zum Beispiel Vinylgruppen, oder 2,3-Dihydroxypropylgruppen oder 3-Aminopropylgruppen oder Dodecylgruppen eingeführt. Geeignete Silane für diese Reaktionen und Verfahren zur Derivatisierung der SiO₂-Oberfläche sind dem Fachmann bekannt und in gängigen Handbüchern, z.B. in "Porous Silica" (K.K Unger; Elsevier; 1979), zusammengestellt.

Die Poren von SiO₂-Teilchen lassen sich erweitern; geeignete Verfahren sind dem Fachmann bekannt und in der Literatur beschrieben. Dazu gehören Hydrothermal-Methoden, z.B. dargestellt in "The Chemistry of Silica" (R.K Iler; John Wiley & Sons; 1979) und die Salzaufweitung (US 3,417,928). Wegen der besseren Diffusionsverhalten sind Materialien mit Mesoporen solchen mit Mikroporen überlegen.

Partikeldurchmesser und deren Verteilung wurden durch Auswertung von elektronenmikroskopischen Aufnahmen bestimmt (Zahlenmittel). Für die Porendurchmesser und ihre Verteilung, sowie für die Bestimmung des Porenvolumens wurde das Absorptions- und Desorptionsverhalten von Stickstoff bestimmt und auch die Quecksilberporosometrie verwendet. Für die Auswertung wurde bei Mikroporen das Modell von Langmuir, für Mesoporen die BET-Methode verwendet.

Die folgenden Beispiele sollen den Erfindungsgedanken näher erläutern und stellen keine Einschränkung der Erfindung dar.

### Beispiele

### Beispiel 1:

a) Vorläufer-Lösung
   5 ml Tetraethoxysilan (98 % Gehalt; Fa. Wacker, DE) und 1 ml n-Octadecyltrimethoxysilan (technisch, 90 % Gehalt; Fa. Aldrich; USA) werden gemischt.
b) Reaktionslösung
   74 ml Ethanol (absolut; Fa. Merck, DE), 10 ml destilliertes Wasser und 10 ml Ammoniaklösung (32 Gew.-%; reinst; Fa. Merck, DE) werden gemischt.
c) Reaktion
   Die Reaktionslösung wird in einem Kolben vorgelegt und die Vorläuferlösung zugefügt. Bei 20 °C ist die Reaktion nach 60 Minuten vollständig abgelaufen. Die Lösungsmittel werden bei 120 °C abdestilliert und die Kieselgelpartikel bei 100 °C im Vakuum getrocknet.
d) Pyrolyse
   Die Partikel werden in einem Ofen mit einer Aufheizrate von 1 °C/Minute auf 1000 °C erhitzt und anschließend an der Luft abgekühlt.

Es resultieren Kieselgelpartikel mit folgenden Parametern:

| | |
|---|---|
| mittlere Partikeldurchmesser: | 630 nm; |
| Standardabweichung des Partikeldurchmessers (%): | 4 |
| spezifische Oberfläche (BET): | 665 m²/g |
| mittlerer Porendurchmesser (BJH): | 4 nm |
| spezifisches Porenvolumen: | 0,76 ml/g. |

Mikroporen waren nicht meßbar.

### Beispiel 2:

a) Vorläufer-Lösung
   5 ml Tetraethoxysilan (98 % Gehalt; Fa. Wacker, DE) und 0,5 ml n-Odyltrimethoxysilan (technisch, 90 % Gehalt; Fa. Aldrich; USA) werden gemischt.

Die Reaktionslösung und die Reaktion werden wie in Beispiel 1 beschrieben ausgeführt. Es resultieren Kieselgelpartikel mit folgenden Parametern:

| | |
|---|---|
| mittlere Partikeldurchmesser: | 520 nm; |
| Standardabweichung des Partikeldurchmessers (%): | 7 |
| spezifische Oberfläche (BET): | 393 m²/g |
| mittlerer Porendurchmesser (BJH): | 4 nm |
| spezifisches Porenvolumen: | 0,59 ml/g. |

Mikroporen waren nicht nachweisbar.

### Beispiel 3:

Entsprechend Beispiel 1 werden verschiedene Reaktionsansätze vorbereitet und ausgeführt. Dabei wird die Konzentration des n-Octadecyltrimethoxysilans variiert. Es resultieren Partikel mit folgenden Parametern:

| | a) | b) | c) | d) |
|---|---|---|---|---|
| n-Octadecyltrimethoxysilan (mMol) | 8,3 | 11,8 | 23,5 | 47,2 |
| spez.Oberfläche (BET; m²/g) | 193 | 289 | 460 | 443 |
| spez.Porenvolumen (ml/g) | 0,17 | 0,23 | 0,45 | 0,59 |
| mittlerer Porendurchmesser BJH; nm) | 3,3 | 3,2 | 3,9 | 5,3 |
| Standardabweichung des Partikeldurchmessers (%) | 4 | 4 | 4 | 4 |

### Beispiel 4:

Entsprechend Beispiel 2 werden verschiedene Reaktionsansätze vorbereitet und ausgeführt. Dabei wird die Konzentration des n-Octyltrimethoxysilans variiert. Es resultieren Partikel mit folgenden Parametern:

| | a) | b) | c) | d) |
|---|---|---|---|---|
| n-Octadecyltrimethoxysilan (mMol) | 1,9 | 3,9 | 9,7 | 19,4 |
| spez.Oberfläche (BET; m²/g) | 42,5 | 59,0 | 187 | 393 |
| spez.Porenvolumen (ml/g) | 0,20 | 0,24 | 0,39 | 0,40 |
| mittlerer Porendurchmesser BJH; nm) | 18,3 | 16,5 | 17,1 | 45 |
| Standardabweichung des Partikeldurchmessers (%) | 7 | 7 | 7 | 7 |

### Beispiel 5:

a) Vorläufer-Losung
   5 ml Tetraethoxysilan (98 % Gehalt; Fa. Wacker, DE) und 1 ml n-Octadeoyltrimethorysilan (technisch, 90 % Gehalt; Fa. Aldrich; USA) werden gemischt.
b) Reaktionslösung
   87,5 ml Ethanol (absolut; Fa. Merck, DE), 3,5 ml destilliertes Wasser und 3 ml Ammoniaklösung (32 Gew.-%; reinst; Fa. Merck, DE) werden gemischt.

Die Reaktion wird wie in Beispiel 1 beschrieben ausgeführt. Es resultieren Kieselgelpartikel mit folgenden Parametem:

| | |
|---|---|
| mittlere Partikeldurchmesser: | 200 nm; |
| Standardabweichung des Partikeldurchmessers (%): | 7 |
| spezifische Oberfläche (BET): | 654 m²/g |
| mittlerer Porendurchmesser (BJH): | 11 nm |
| spezifisches Porenvolumen: | 0,76 ml/g. |

### Beispiel 6:

### A Primärteilchen

a) Vorläufer-Lösung
   7 ml Tetraethoxysilan (TES 28; 98 % Gehalt; Fa. Wacker, DE) und 1 ml n-Octyltrimethoxysilan (technisch, 90 % Gehalt; Fa. Aldrich; USA) werden gemischt.
b) Reaktionslösung
   150 ml Ethanol (absolut; Fa. Merck, DE), 4,8 ml destilliertes Wasser und 4,8 ml Ammoniaklösung (32 Gew.-%; reinst; Fa. Merck, DE) werden gemischt.

Die Reaktion wird wie in Beispiel 1 beschrieben ausgeführt. Anschließend wird die erhaltene Dispersion weiter umgesetzt.

### B Aufwachsreaktion

Zu der Dispersion der Primärteilchen wird bei 25 °C unter Ruhren (500 UpM) innerhalb von 75 Stunden eine Mischung folgender Zusammensetzung zugetropft: 7 ml Tetraethoxysilan (TES 28; 98 % Gehalt; Fa. Wacker, DE), 1 ml n-Octyltrimethoxysilan (technisch, 90 % Gehalt; Fa. Aldrich; USA) und 40 ml Ethanol (absolut; Fa. Merck, DE).

Anschließend wird die Suspension wie in Beispiel 1 beschrieben aufgearbeitet und pyrolysiert. Es resultieren Kieselgelpartikel mit folgenden Parametern:

| | |
|---|---|
| spezifische Oberfläche (BET): | 93,3 m²/g |
| mittlerer Porendurchmesser (BJH): | 4,6 nm |
| spezifisches Porenvolumen: | 0,11 ml/g. |

### Vergleichsbeispiel A:

Das Vergleichsbeispiel wird entsprechend Beispiel 10 aus JP 89-239 015 ausgeführt:
Eine Mischung aus 68,3 ml Ethanol (absolut) und 10,1 ml konzentrierter wäßriger Ammoniaklösung (32 %) werden vorgelegt. Als Vorläuferlösung wird eine Mischung aus 11,4 ml Ethanol (absolut), 7,8 ml Tetraetoxysilan und 2,4 ml Phenyltrietoxysilan innerhalb einer Stunde bei Raumtemperatur unter Rühren zugetropft und 5 Stunden weitergerührt. 50 g Diethylenglycol werden auf 120 °C erhitzt und die erhaltene Dispersion wird unter Rühren zugetropft, dabei destilliert das Ethanol-Wasser-Gemisch ab. Anschließend wird die Temperatur auf 180 °C erhöht und die Dispersion der Kieselgelpartikel in Diethylenglycol 5 Stunden unter Rüdkfluß gekocht. Schließlich wird das Ethylenglycol bei 180 °C im Vakuum abdestilliert. Das Reaktionsprodukt wird bei 450 °C im Ofen gebrannt.

Es resultieren Kieselgelpartikel mit folgenden Parametern:

| | |
|---|---|
| spezifische Oberfläche (Langmuir): | 451 m²/g; |
| mittlerer Porendurchmesser (Langmuir): | < 2 nm; |
| spezifisches Porenvolumen: | 0,24 ml/g; |
| davon Mikroporen: | 0,14 ml/g. |

## Patentansprüche

1. Verfahren zur Herstellung von porösen kugelförmigen Teilchen bestehend aus reinem SiO₂ mit einem mittleren Teilchendurchmesser d₅₀ von 0,05 bis 10 µm, einer Standardabweichung des Teilchendurchmessers von höchstens 15 % und einer Porenweite von 2-20 nm (20-200 Å), gekennzeichnet durch folgende Verfahrensschritte:
a) Herstellen von kugelförmigen SiO₂-Teilchen mit einem mittleren Teilchendurchmesser d₅₀ von 0,05 bis 10 µm durch Hydrolyse und Polymerisation von Gemischen enthaltend Tetraalkoxysilane der Formel I sowie Trialkoxysilane der Formel II,
(R¹- O)₄Si I
(R¹- O)₃Si-R² II
worin
R¹ C₁-C₁₀-Alkyl
R² C₅-C₂₅-Alkyl, C₆-C₁₄-Aryl, C₇-C₂₅-Alkylaryl, C₇-C₂₅-Arylalkyl
bedeuten;
b) Isolierung und Trocknung der Teilchen aus Schritt a);
c) Brennen der Teilchen bei einer Temperatur zwischen 600 und 1300 °C, wobei die Reste R² verbrennen und Poren entstehen.

2. Verfahren nach Anspruch 1, dadurch gekennzeichnet, daß Silane der Formel I im 3- bis 250-fachen molaren Überschuß bezogen auf die Silane der Formel II vorliegen.

3. Pulver bestehend aus porösen kugelförmigen Teilchen im wesentlichen bestehend aus SiO₂ mit einem mittleren Teilchendurchmesser d₅₀ von 0,05 bis 10 µm, einer Standardabweichung des Teilchendurchmessers von höchstens 15 % und einer Porenweite von 2-20 nm (20-200 Å).

4. Verwendung eines Pulvers bestehend aus porösen kugelförmigen Teilchen im wesentlichen bestehend aus SiO₂ mit einem mittleren Teilchendurchmesser d₅₀ von 0,05 bis 10 µm, einer Standardabweichung des Teilchendurchmessers von höchstens 15 % und einer Porenweite von 2-20 nm (20-200 Å) für die Herstellung von oberflächenderivatisiertem Kieselgel.

5. Verwendung eines Pulvers bestehend aus porösen kugelförmigen Teilchen im wesentlichen bestehend aus SiO₂, mit einem mittleren Teilchendurchmesser d₅₀ von 0,05 bis 10 µm, einer Standardabweichung des Teilchendurchmessers von höchstens 15 % und einer Porenweite von 2-20 nm (20-200 Å) für die Herstellung von porösen kugelförmigen SiO₂-Partikeln mit auf bis zu 1000 nm (10000 Å) erweiterten Poren.

## Claims

1. Process for the production of porous spherical particles consisting of pure SiO₂ having a mean particle diameter d₅₀ of 0.05 to 10 µm, a standard deviation of the particle diameter of at most 15% and a pore width of 2 - 20 nm (20 - 200 Å), characterized by the following process steps:
a) production of spherical SiO₂ particles having a mean particle diameter d₅₀ of 0.05 to 10 µm by hydrolysis and polymerization of mixtures comprising tetraalkoxysilanes of the formula I and trialkoxysilanes of the formula II,
(R¹-O)₄Si I
(R¹-O)₃Si-R² II
where
R¹ is C₁-C₁₀-alkyl
R² is C₅-C₂₅-alkyl, C₆-C₁₄-aryl, C₇-C₂₅-alkylaryl, C₁-C₂₅-arylalkyl;
b) isolation and drying of the particles from step a);
c) ignition of the particles at a temperature between 600 and 1300°C, with the radicals R² burning and pores forming.

2. Process according to Claim 1, characterized in that silanes of the formula I are present in a 3-to 250-fold molar excess based on the silanes of the formula II.

3. Powder consisting of porous spherical particles essentially consisting of SiO₂ having a mean particle diameter d₅₀ of 0.05 to 10 µm, a standard deviation of the particle diameter of at most 15% and a pore width of 2 - 20 nm (20 - 200 Å).

4. Use of a powder consisting of porous spherical particles essentially consisting of SiO₂ having a mean particle diameter d₅₀ of 0.05 to 10 µm, a standard deviation of the particle diameter of at most 15% and a pore width of 2 - 20 nm (20 - 200 Å) for the production of surface-derivatized silica gel.

5. Use of a powder consisting of porous spherical particles essentially consisting of SiO₂ having a mean particle diameter d₅₀ of 0.05 to 10 µm, a standard deviation of the particle diameter of at most 15% and a pore width of 2 - 20 nm (20 - 200 Å) for the production of porous spherical SiO₂ particles having pores enlarged up to 1000 nm (10,000 Å).

## Revendications

1. Procédé de fabrication de particules sphériques poreuses composées de SiO₂ avec un diamètre de particule moyen d₅₀ de 0,05 à 10 µm, un écart type du diamètre de particule de 15 % au maximum et une taille de pores de 2 à 20 nm (20 à 200 Å), caractérisé en ce qu'il comprend les étapes consistant à :
a) préparer des particules sphériques de SiO₂ avec un diamètre de particule moyen d₅₀ de 0,05 à 10 µm par hydrolyse et polymérisation de mélanges contenant des tétraalcoxysilanes de la formule I ainsi que des trialcoxysilanes de la formule II,
(R¹-O)₄Si I
(R¹-O)₃Si-R² II
dans lesquelles
R¹ est un alkyle en C₁ à C₁₀,
R² est un alkyle en C₅ à C₂₅, un aryle en C₆ à C₁₄, un alkylaryle en C₇ à C₂₅, un arylalkyle en C₇ à C₂₅ ;
b) isoler et sécher les particules obtenues à l'étape a) ;
c) brüler les particules à une température de 600 à 1300 °C afin de brûler les résidus R² et former ainsi des pores.

2. Procédé selon la revendication 1, caractérisé en ce que les silanes de la formule I sont présents selon un excès molaire de 3 à 250 fois par rapport aux silanes de la formule II.

3. Poudre composée de particules sphériques poreuses essentiellement constituées de SiO₂ avec un diamètre de particule moyen d₅₀ de 0,05 à 10 µm, un écart type du diamètre de particule de 15 % au maximum et une taille de pores de 2 à 20 nm (20 à 200 Å).

4. Utilisation d'une poudre composée de particules sphériques poreuses essentiellement constituées de SiO₂ avec un diamètre de particule moyen d₅₀ de 0,05 à 10 µm, un écart type du diamètre de particule de 15 % au maximum et une taille de pores de 2 à 20 nm (20 à 200 Å) pour la préparation de gel de silice dérivatisé en surface.

5. Utilisation d'une poudre composée de particules sphériques poreuses essentiellement constituées de SiO₂ avec un diamètre de particule moyen d₅₀ de 0,05 à 10 µm, un écart type du diamètre de particule de 15 % au maximum et une taille de pores de 2 à 20 nm (20 à 200 Å) pour la préparation de particules de SiO₂ sphériques poreuses avec des pores élargis jusqu'à 1 000 nm (10 000 Å).
